## Europäisches Patentamt

## European Patent Office

## Office européen des brevets

(19)

(11) Publication number: 0 289 323
A2

# (12) EUROPEAN PATENT APPLICATION

(21) Application number: 88303872.1

(22) Date of filing: 28.04.88

(51) Int. Cl.⁴: **G 07 F 11/42**
**G 07 F 11/58**

(30) Priority: 30.04.87 JP 65774/87

(43) Date of publication of application:
02.11.88 Bulletin 88/44

(84) Designated Contracting States: **DE GB IT**

(71) Applicant: **SANDEN CORPORATION**
**20 Kotobuki-cho**
**Isesaki-shi Gunma, 372 (JP)**

(72) Inventor: **Takamura, Toshiyuki**
**2-21-16 Nakai-machi Takasaki-shi**
**Gunma, 370 (JP)**

**Kurihashi, Kazunari**
**946-3 Serada Ojima-machi**
**Nitta-gun Gunma, 370-01 (JP)**

**Harada, Masazumi**
**875-4 Yawatabara-machi**
**Takasaki-shi Gunma, 370-11 (JP)**

(74) Representative: **Stuart, Ian Alexander et al**
**MEWBURN ELLIS & CO. 2/3 Cursitor Street**
**London EC4A 1BQ (GB)**

(54) **An automatic vending machine.**

(57) An automatic vending machine has a dispensing mechanism including a merchandise pushing device 4 to move the merchandise horizontally by a predetermined distance to a discharge opening 2a. A discharge preventing device includes a control plate 12 normally urged against the merchandise to hold it in position. The plate 12 is locked against rotation by engagement with a locking element 16. This engagement is controlled by control device (solenoid 19) which frees the rotating motion of the plate 12 while a dispensing operation is in progress.

FIG.4

**Description**

## AN AUTOMATIC VENDING MACHINE

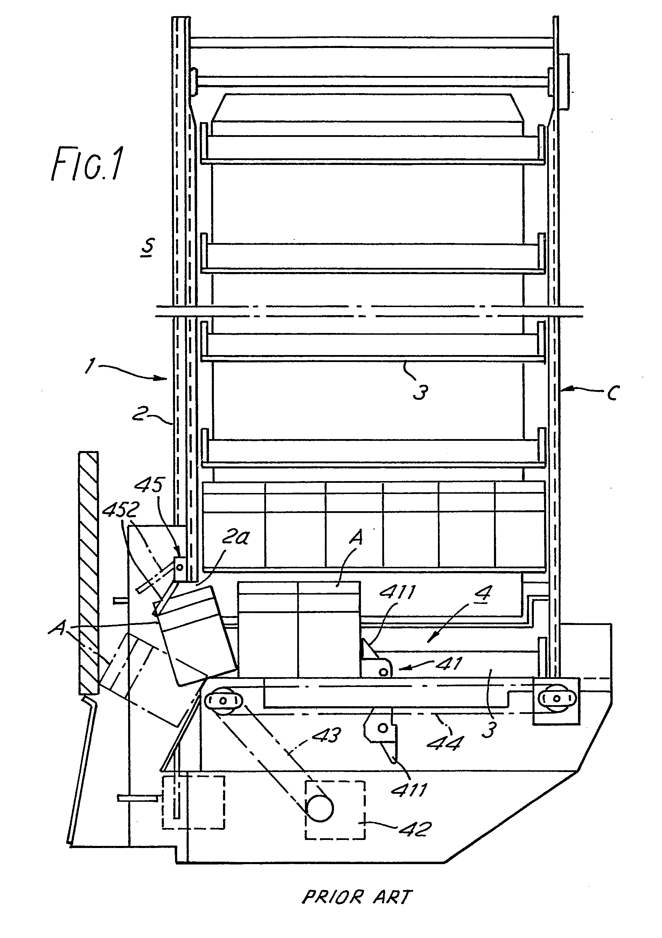

This invention relates to an automatic vending machine, and more particularly to an automatic vending machine with improved means for controlling the dispensing of items of merchandise. Many types of merchandise are now sold by automatic vending machines. Thus, different types of automatic vending machine with different types of dispensing mechanism are known. Fig. 1 shows a partly sectional view of one type of vending machine which is suitable for storing and dispensing paper cartons containing drinks.

In this vending machine 1, a storage chamber "S" contains at least one column C to store and dispense the merchandise. The column "C" comprises an outer frame element 2 with merchandise discharge opening 2a, a plurality of shelves 3 backwardly extended within the frame element 2, and a dispensing mechanism 4 located on lower portion of frame element 2 to oppose discharge opening 2a and to dispense the merchandise one by one through discharge opening 2a. The shelves 3 are vertically movable connected with one another; so that if merchandise stored on one shelf is fully sold out, the next shelf replaces the empty shelf due to vertical movement.

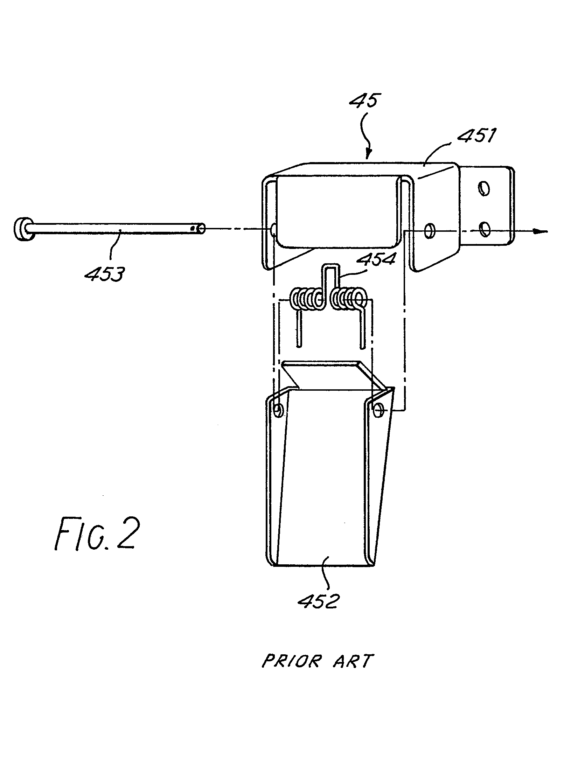

The dispensing mechanism comprises a merchandise pushing device 4 including a pair of pushing elements 411 horizontally moved along the shelf by motor 42 through endless chain elements 43,44; and a device 45 for preventing the merchandise from falling out. The fall out preventing device 45 is disposed adjacent the discharge opening 2a of column "C" and, as shown in Fig. 2, comprises an attached element 451 fixed on outer frame 2, control plate 452 rotatably supported on attached element 451 through supporting shaft 453, and coil spring 454 to push control plate 452 toward merchandise "A". Therefore the merchandise stored on lowermost positioned shelf 3 is normally held between control plate 452 and pushing element 411, and dispensed one by one by horizontal movement of pushing element 411.

As above explained, the articles positioned at the dispensing stage are held between control plate 452 of fall out preventing device 45 and pushing element 411, and are normally pushed backwardly due to recoil strength of coil spring 454. Therefore, merchandise is maintained in position by function of control plate 452. However if pushing force of control plate 452 (which may be caused by recoil strength of coil spring 454 and acts against the merchandise "A") is small, it is feared that the merchandise "A" nearly positioned on the discharge opening 2a may fall down from shelf 3 to the guide way of vending machine 1 when the vending machine 1 is shaken, hit or tilted. If the pushing force of control plate 452 is made strong, such problems should not occur. But if the recoil strength of coil spring 454 is made stronger, the dispensing force of pushing element 411 should be correspondingly stronger to accomplish the dispensing operation. There can then be a risk that a plurality of articles of merchandise are dispensed by one cycle of the dispensing operation, because the pushing force is very strong.

Furthermore, control plate 452 is normally unlocked and easily rotated by force acted against thereto. Therefore, the merchandise may be easily stolen by rotation of the control plate from outside of vending machine through the dispensing opening.

It is desirable to provide a dispensing mechanism for an automatic vending machine which can accomplish a smooth dispensing operation without damaging the merchandise.

It is also desirable to provide a dispensing mechanism for an automatic vending machine which makes theft more difficult.

According to the present invention there is provided an automatic vending machine having a dispensing mechanism comprising a merchandise pushing device to accomplish predetermined horizontal movements of merchandise to a dispensing station; and a device for restraining discharge of the merchandise at the dispensing station; the device comprising a control plate rotatably supported and normally pushed toward the merchandise due to recoil strength of a resilient element so as to urge the merchandise backwardly, characterised in that the discharge-restraining device includes a locking element to control the rotating movement of said control plate due to engagement between said control plate and locking element; and a control device for controlling said engagement.

The dispensing mechanism may include a column for storing and dispensing the merchandise. The column is provided with at least one shelf on which a plurality of articles of merchandise are stored, and dispensing mechanism which comprises a merchandise pushing device to accomplish the horizontal movement of merchandise by a predetermined distance; and a device for preventing discharge of merchandise by normally pushing the merchandise backwardly. The discharge preventing device includes a control plate which is rotatably supported and pushed toward the merchandise by recoil strength of coil element, and a locking element which controls the rotating motion of the control plate due to engagement therebetween. The engagement between the control plate and locking element is controlled by control device. Thereby, the control plate is only rotatable while the dispensing operation is taking place.

Further desirable features and other aspects of this invention will be understood from the following detailed description of a preferred embodiment of this invention with reference to the annexed drawings, in which:

Fig. 1 is a partly sectional view of a vending machine to illustrate the conventional dispensing mechanism;

Fig. 2 is an exploded perspective view of the merchandise discharge preventing device utilized in the vending machine of Fig. 1;

Fig. 3 is a partly sectional view of a vending machine in accordance with one embodiment of this invention;

Fig. 4 is a sectional view of the merchandise discharge preventing device utilized in the vending machine of Fig. 3;

Fig. 5 is a front view of the device of Fig. 4; and

Fig. 6 is an exploded perspective view of the device of Fig. 4.

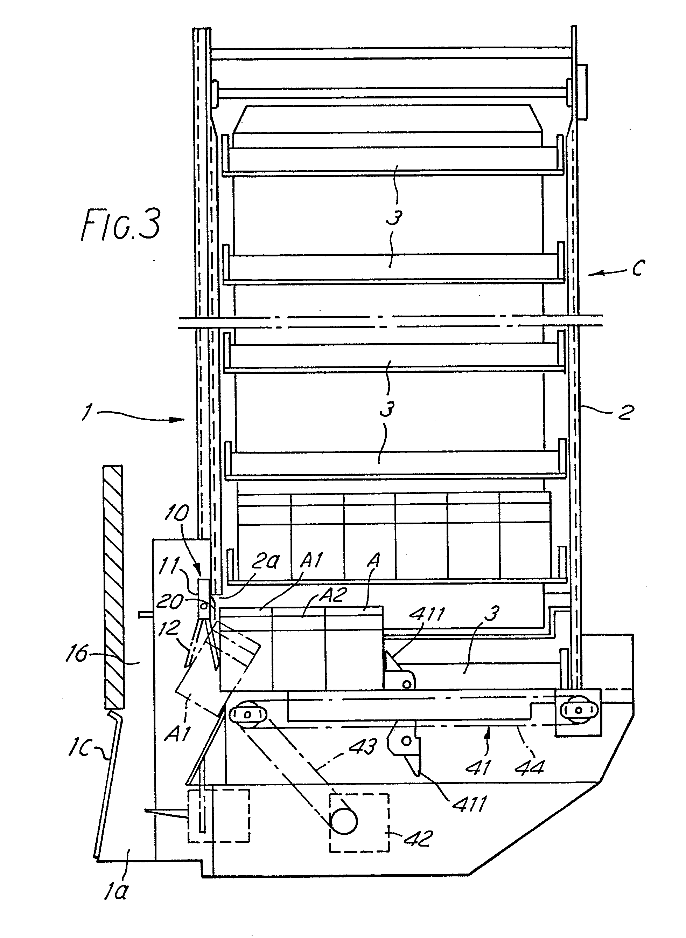

Referring to Fig. 3, a vending machine with dispensing mechanism in accordance with one embodiment of this invention is of the same construction as a conventional vending machine except for the merchandise discharge preventing device. Therefore the same numerals as Fig. 1 are used to indicate the same or similar parts.

An automatic vending machine 1 has a storage chamber which provides at least one column "C" to store and dispense the merchandise. The merchandise is delivered to discharge position 1a of vending machine 1 from the column "C" through delivering way 1b. Therefore a customer can take a purchased item from discharge position 1a after removing the cover plate 1c. The column "C" comprises an outer frame element 2 with discharge opening 2a at its lower portion and a plurality of shelves 3 horizontally backwardly extending within the frame element 2. A dispensing mechanism 4 is located on a lower portion of column "C" to accomplish the dispensing of items of merchandise, one by one.

The shelves 3 are vertically movably connected with one another, and lowermost positioned shelf 3 is engaged with dispensing mechanism 4. Dispensing mechanism 4 comprises a pair of pushing elements 411 driven by motor 42 through endless chain elements 43,44, and a discharge (or fall down) preventing device 10. Therefore, items of merchandise "A" stored on shelf 3 are dispensed one by one in accordance with operation of pushing element 411. Thus the horizontal moving distance of pushing element 411 is determined in order that it should push out only one item of merchandise.

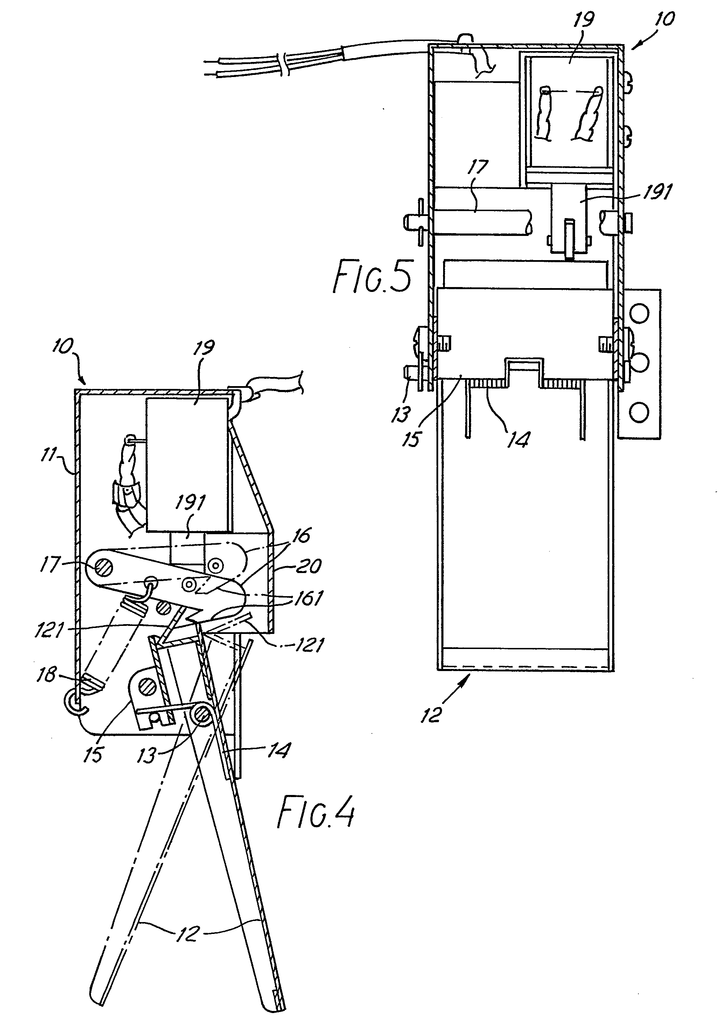

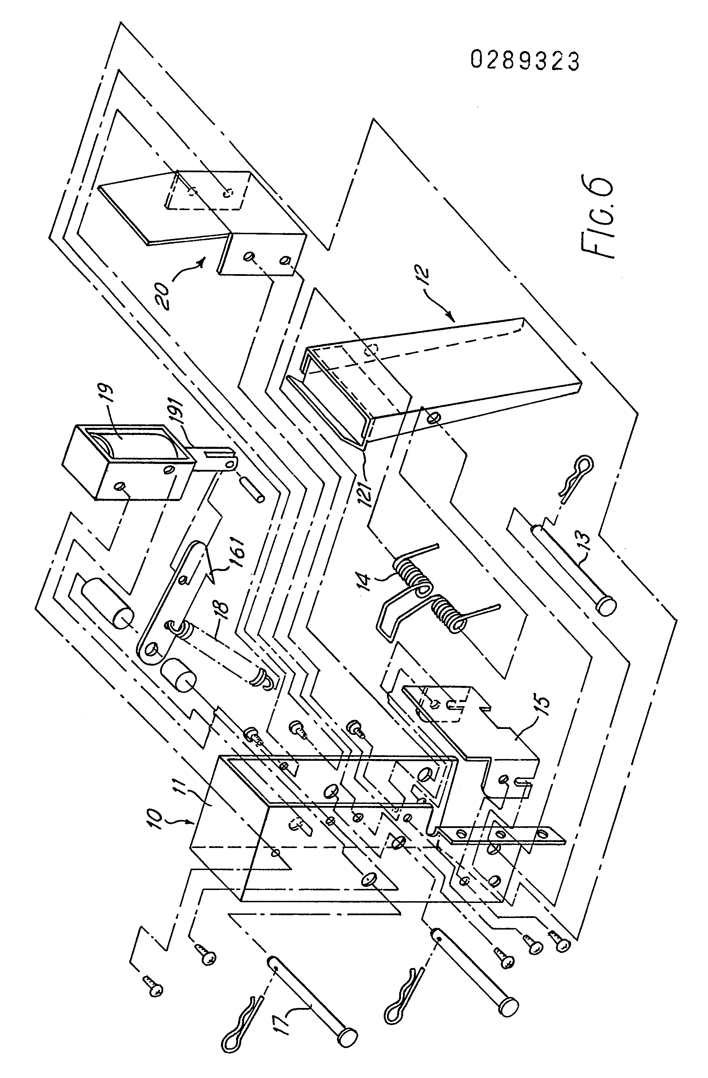

As shown in Figs. 4 to 6, the discharge preventing device 10 is disposed on upper edge portion of discharge opening 2a. It has a box type case element 11 in which a control plate 12 and control device for control plate 12 are disposed. Case element 11 is affixed on outer frame element 2. Control plate 12 is rotatably supported on case element 11 through supporting shaft element 13 and extended into upper space of discharge opening 2a to normally contact the item of merchandise "A1" which is to be dispensed next.

Control plate 12 is normally urged inwardly through the discharge opening 2a due to recoil strength of double torsion type coil spring 14. This torsion type coil spring 14 is coiled about supporting shaft 13, and end portions are urged against control plate 14 and supporting plate 15 fixed on case element 11, respectively.

Movement of control plate 12 is restricted by operation of locking element 16. This is swingably attached on case element 11 through shaft element 17 and interacts with an upper portion of control plate 12. Locking element 16 is normally pulled downwardly by coil spring 18 and also connected with lever 191 of a solenoid 19. A lower portion of locking element 16 has a hook portion 161 disposed to engage a detent portion 121 formed on upper portion of control plate 12. Thus, if hook portion 161 is engaged with the detent portion 121 of control plate 12, control plate 12 is locked. Reversely, if hook portion 161 is disengaged due to energization of solenoid 19, control plate 12 is able to rotate in accordance with the pushing force acting on it.

The upper opening space of case element 11 which faces the outer frame element 2 is covered by a posture control plate 20 which serves to control the dispensing posture of merchandise discharged from dispensing opening 2a. Thereby, an item A1 being dispensed from the discharge opening 2a is tilted so as to exit bottom first, as is indicated by the double-dotted line in Fig. 3.

As mentioned above, movement of control plate 12 is controlled by solenoid 19. When the vending machine 1 is to perform a dispensing operation, locking element 16 is pulled upwardly by operation of solenoid 19 to release the engagement between hook portion 161 of locking element 16 and detent portion 121 of control plate 12. At the same time, pushing element 411 is driven by the motor 42 to push the merchandise "A" forwardly. When the pushing force of pushing element 411 exceeds the recoil strength of coil spring 14, control plate 12 is rotated to open the discharge opening 2a to allow the discharge of an item A of merchandise.

During the discharge operation, the upper portion of the item A1 being dispensed is pushed against the posture control plate 20 to restrain its forward movement, but the lower portion of the item A1 is moved forwardly due to operation of pushing element 411. Thus the item A1 is moved through the discharge opening 2a bottom portion first. After completion of one dispensing operation, the next item A2 to be dispensed is positioned just before the discharge opening 2a. Control plate 12 is returned to its former position due to recoil strength of coil spring 14. At that time, hook portion 161 of locking element 16 and detent portion 121 of control plate 12 engaged one another, to thereby lock the movement of control plate 12. Once this is locked, merchandise cannot fall through the discharge opening even if the machine is shaken, hit or tilted. Also stealing of merchandise due to rotating the control plate from outside of vending machine is prevented. Furthermore, the merchandise stored on the column is held without damage, and also smoothly dispensed.

The present invention has been described in accordance with preferred embodiment. This embodiment, however, is merely for example only, and the invention should not be construed as limited thereto.

## Claims

1. An automatic vending machine having a dispensing mechanism comprising a merchandise pushing device (4) to accomplish predetermined horizontal movements of merchandise (A) to a dispensing station (2a); and a device (10) for restraining discharge of the merchandise at the dispensing station; the device comprising a control plate (12) rotatably supported and normally pushed toward the merchandise (A) due to recoil strength of a resilient element (14) so as to urge the merchandise backwardly, characterised in that the discharge-restraining device (10) includes a locking element (16) to control the rotating movement of said control plate (12) due to engagement between said control plate (12) and locking element (16); and a control device (19) for controlling said engagement.

2. The automatic vending machine of claim 1 wherein said control device (19) is a solenoid actuable to displace said locking element (16).

3. The automatic vending machine of claim 2 wherein said locking element (16) is normally pulled downwardly by a coil spring (18) to secure the engagement, and is pullable upwardly by energization of said solenoid (19) to release the engagement.

4. The automatic vending machine of claim 2 or 3 wherein operation of the merchandise pushing device (4) is synchronised with actuation of the solenoid so that the locking element (16) is displaced during a dispensing operation.

0289323

## FIG.1

PRIOR ART

0289323

45

451

453

454

FIG.2

452

PRIOR ART

FIG.3

FIG.5

FIG.4

Fig.6

0289323